# EUROPEAN PATENT SPECIFICATION

(11) **EP 2 934 033 B1**
(45) Date of publication and mention of the grant of the patent: **30.10.2019**
(21) Application number: 13871870.5
(22) Date of filing: 09.09.2013
(51) Int. Cl.: H04W 16/14, H04W 72/12, H04W 84/08, H04W 16/10, H04W 72/08, H04W 72/04

(54) **METHOD AND BASE STATION FOR PERFORMING INTERFERENCE COORDINATION IN LTE TRUNKING COMMUNICATION SYSTEM**
VERFAHREN UND BASISSTATION ZUR INTERFERENZKOORDINATION IN EINEM LTE-TRUNKIERUNGSKOMMUNIKATIONSSYSTEM
PROCÉDÉ ET STATION DE BASE POUR EXÉCUTER UNE COORDINATION D'INTERFÉRENCES DANS UN SYSTÈME DE COMMUNICATION LTE À PARTAGE DE RESSOURCES

(30) Priority: 17.01.2013 CN 201310016783
(43) Date of publication of application: 21.10.2015
(73) Proprietor: ZTE Corporation, Shenzhen, Guangdong 518057 (CN)
(72) Inventor: LUO, Su, Shenzhen Guangdong 518057 (CN)
(74) Representative: CMS Cameron McKenna Nabarro Olswang LLP
(86) International application number: PCT/CN2013/083104
(87) International publication number: WO 2014/110904

(56) References cited:
- CN-A- 101 420 734
- CN-A- 101 860 912
- CN-A- 102 104 881
- CN-A- 102 638 767
- CN-A- 103 052 079
- US-A1- 2012 044 815

## Description

### Technical Field

The present invention relates the communication field, more particular to a method and a base station for performing interference coordination in a Long Term Evolution (LTE) trunking communication system.

### Background of the Related Art

LTE is a long term evolution project of the 3rd Generation Partnership Project (3GPP), and also is the biggest research and development project for the new technology started by the 3GPP in present two years, and the LTE technology which takes Orthogonal Frequency Division Multiplexing (OFDM)/Frequency Division Multiple Access (FDMA) as the core, can be regarded as "quasi 4G" technology. The main advantages of the LTE are high peak rate, small system latency, and supporting flexible configurations for bandwidths, thereby the LTE has wide application prospect. For example, the peak rates for downlink and uplink in LTE system are provided at 100Mbps and 50Mbps respectively with a 20MHz spectral bandwidth, one-way transmission latency inside a user plane is less than 5ms, the flexible configurations for bandwidths is supported from 1.4MHz to 20MHz, and also the carrier aggregation technology can be used to further improve a cell capacity.

A trunking communication system is a specific wireless communication system which is developed to satisfy commanding and dispatching demands of the industrial subscriber and is oriented to specific industrial application, a great number of wireless subscribers in the system share a small number of wireless channels, the commanding and dispatching is the main application in a trunk communication system and the trunk communication system is a multipurpose high-performance wireless communication system.

According to network type classification, the main trunking application bearer network in China are Global System for Mobile Communications (GSM) trunking system, Code Division Multiple Access (CDMA) 2000 trunking system. Due to the limited bandwidths, these trunking system only can use a function for voice calls. While advantages of the LTE network are wide bandwidths, and high data rate services. Therefore, a trunking system based on an LTE network type becomes a trend in development. In this kind of trunking system, not only the voice calls are performed, but also high data rate services such as videophone calls, and video living broadcasts, etc., are achieved.

Since a common LTE system bases on same frequency networking, there are same frequency interferences between cells. In order to solve this problem, an Inter-Cell Interference Coordination (ICIC) function is introduced into LTE, a series of processing mechanism are defined in the protocol, including: distinguishing resources according to a Cell Edge User (CEU), Cell Center User (CCU), Out Cell (OC), Inter Cell (IC) and Borrow Cell (BC), transferring an Overload Indicator (Overload Indicator), a High Interference Indication (HII), Relative Narrowband TX Power (RNTP) information to perform power control and resource allocation between X2 interfaces, thereby same frequency interference is reduced and system performance and user experience are improved.

The LTE trunking communication system is same frequency networking which is same as the common LTE system, the problem that the same frequency interferences between the cells still exists, therefore it is needed for a set of interference coordination mechanism.

The service object of the common LTE system is a single user; but the service object of the trunking system is a group, and a plurality of users are included in the group. Distributions of the users in the group have a characteristic: some may be in cell center, some may be in cell edge, some even may be in another cell. Although the distributions of the users in the groups are not fixed, a base station adopts same service policy for all the users under the group-which is decided by the characteristic of the trunking system, thus the users in the group cannot be divided as cell edge users, cell center users, inter cell, and outer cell, etc like the processing in the common LTE network. Therefore, the interference coordination mechanism of the trunking system cannot adopt the mechanism of the common LTE system.

US2012/044815A1 provides a method and apparatus for supporting P2P communication in a wide area network (WAN). In an aspect, interference coordination between P2P devices engaged in P2P communication and WAN devices engaged in WAN communication may be performed based on a network-controlled architecture. For the network-controlled architecture, P2P devices may detect other P2P devices and/or WAN devices and may send measurements (e.g., for path loss, interference, etc.) for the detected devices to the WAN (e.g., serving base stations). The WAN may perform resource partitioning and/or association for the P2P devices based on the measurements. Association may include selection of P2P communication or WAN communication for a given P2P device. Resource partitioning may include allocation of resources to a group of P2P devices for P2P communication. The WAN may send the results of association and/or resource partitioning to the P2P devices, which may communicate in accordance with the association and/or resource partitioning results.

### Summary of the Invention

The purpose of the present invention is to provide a method and a base station for performing interference coordination in a Long Term Evolution (LTE) trunking communication system according to appended independent claims, which overcomes the defect that interference coordination cannot be performed on existing trunking services. Further improvements and embodiments are provided in the dependent claims.

After the embodiments of the present invention are adopted, the same frequency interferences between the cells are reduced or avoided, the system performance is improved and the user awareness is enhanced in the LTE trunking communication system,

### Brief Description of Drawings

Fig. 1 is a flowchart of a method for processing interference coordination in an LTE trunking communication system.
Fig.2 (a)-2 (c) are respectively schematic diagrams of realization ways for interference coordination resource allocation in application examples of the present invention;
Fig.3 is a flowchart of a method for performing interference coordination on one cell in the application examples of the present invention.

### Preferred Embodiments of the Present Invention

The embodiments of the present invention will be described in details below, in conjunction with accompanying drawings. It should be illustrated that without a conflict, the embodiments of the present application and the features in the embodiments can be combined with each other randomly.

The main needs for a trunking user are voice services and video media streams, both service bearers are used by means of using semi-static scheduling in LTE system, and time-frequency resources of the both service bearers are relatively fixed.

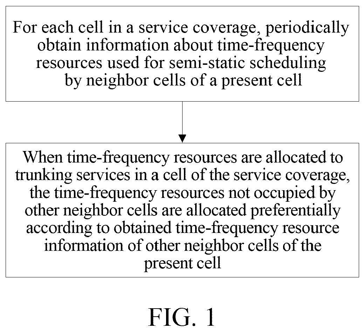

The present invention provides a method for performing interference coordination in an LTE trunking communication system utilizing above characteristic of the LTE trunking system, as shown in Fig.1, a base station performs following operations.

For each cell in service coverage, the base station obtains information about time-frequency resources of neighbor cells of a present cell used upon semi-static scheduling periodically;
when allocating time-frequency resources to trunking services in cells of the service coverage, it is to preferentially allocate time-frequency resources which are not occupied by other neighbor cells according to the obtained time-frequency information of other neighbor cells of the present cell, thereby interference coordination between the neighbor cells is achieved.

When the neighbor cells and the present cell are located in service coverage of a same base station, the base station obtains the information about time-frequency resources of the neighbor cells of the present cell used upon semi-static scheduling periodically, specifically comprising that:
when a preset time-frequency resource interaction period is reached, the base station counts information about time-frequency resources of the neighbor cells used upon semi-static scheduling recorded during the time-frequency resource interaction period.

When the neighbor cells and the present cell are located in service coverage of different base stations, the base station obtains the information about time-frequency resources of the neighbor cells of the present cell used upon semi-static scheduling periodically, specifically comprising that:
when the preset time-frequency resource interaction period is reached, the base station sends information about time-frequency resources of cells in the service coverage used upon semi-static scheduling recorded during the time-frequency resource interaction period to serving base stations of the neighbor cells of the present cell.

The present invention will be further described blow by way of several application examples.

### Application example one:

For each base station, an administrator can configure neighbor cell (other cells except from a present cell) list in advance through network management background, the base station may take first N cells in the neighbor cell list as time-frequency interference coordination neighbor cells of the present cell, wherein N is a positive integer, and also can configure related parameters of semi-static scheduling for the present cell and time-frequency resource interaction period in advanced through network management background.

A method for performing interference coordination in an LTE trunking communication system, which can be applied to a base station to perform interference coordination on various serving cell in service coverage of the base station, comprises the following processings.

In step 10, the base station records and updates time-frequency occupancy information of each group in each subframe of various cells in service coverage of the base station, the information comprises: frame numbers, subframe numbers, and Resource block (RB) bitmap occupied by trunking services.

In step 20, when the time-frequency resource interaction period is reached, the base station counts the time-frequency occupancy information for each cell in the service coverage of the base station.

In step 30, when time-frequency resources are allocated to the cells in the service coverage, it is to preferentially allocate time-frequency resources not occupied by other neighbor cells of the present cell; if there is no resources left for allocating to the present cell except from the time-frequency resources occupied by the neighbor cells, the time-frequency resources occupied by the other cells can be used.

### Application example two:

For each base station, an administrator can configure neighbor cell(other cells except from a present cell) list in advance through network management background, the base station may take first N cells on the neighbor cell list as time-frequency interference coordination neighbor cells of the present cell, wherein N is a positive integer, and also can configure related parameters of semi-static scheduling for the present cell and time-frequency resource interaction period in advance through network management background.

A method for performing interference coordination in an LTE trunking communication system, which can be applied to perform interference coordination on various cell between different base stations, for each station, it comprises that the following processings.

In step 210, it is to record time-frequency occupancy information of each group in each subframe of cells in service coverage, the information comprises: frame numbers, subframe numbers, and RB bitmap occupied by trunking services.

In step 220, when the time-frequency resource interaction period is reached, it is to broadcast the recorded time-frequency resources occupancy information to serving base stations of the neighbor cells of the cell in the service coverage.

In step 230, when the time-frequency resources occupancy information sent by other base stations are received, it is to update time-frequency resources occupancy information of corresponding cells maintained by the base station itself.

In step 240, when time-frequency resources are allocated to the cells in the service coverage, it is to preferentially allocate time-frequency resources not occupied by other neighbor cells of the present cell; if there is no resources left for allocating to the present cell except from the time-frequency resources occupied by the neighbor cells, the time-frequency resources occupied by the other cells can be used.

The a specific example is used to further describe the method below.

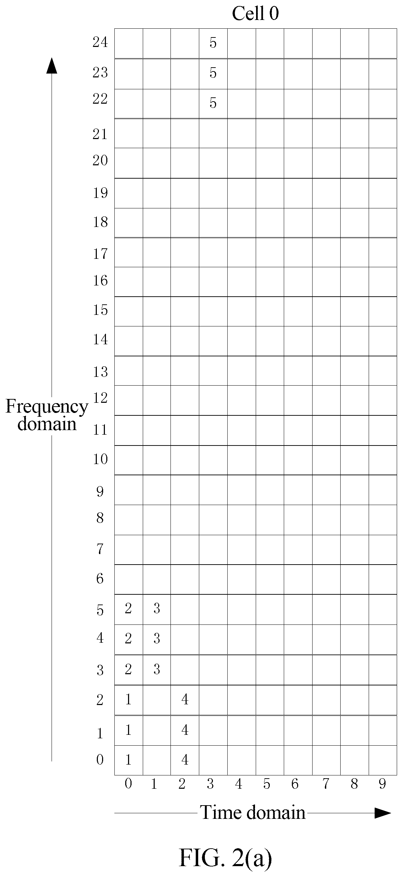

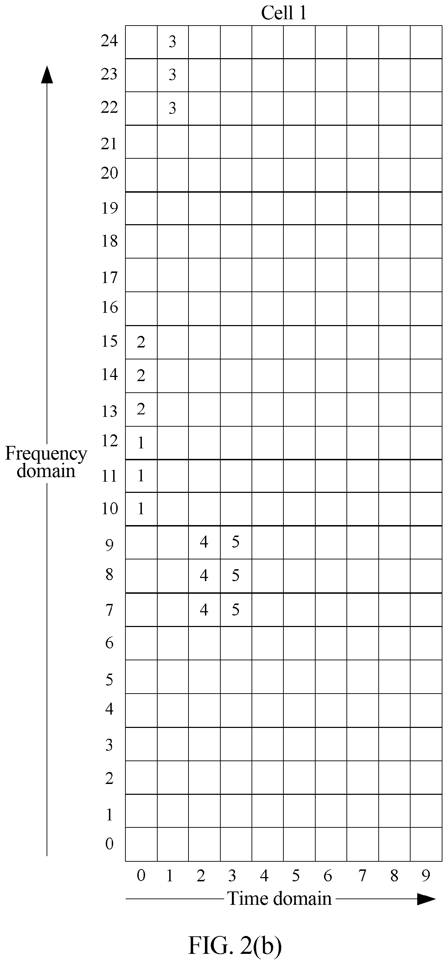

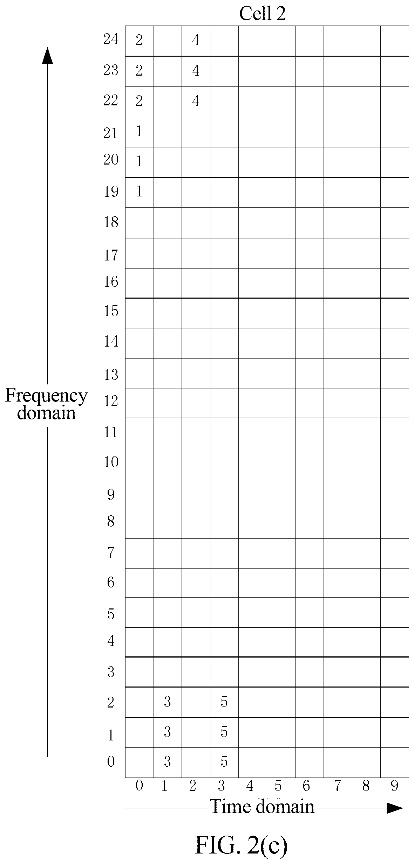

As shown in Fig. 2(a), 2(b) and 2(c), in the figures, a horizontal axis represents time domain resources, and a vertical axis represents frequency domain resources. Each time-frequency resource is only identified by two-dimensional resource of time domain and frequency domain. The number K in each time-frequency resource represents that the time-frequency resource is occupied by group K, wherein, K=1, 2, 3, 4, 5. Assuming that Cell0, Cell1 and Cell2 are neighbor cells.

At time 0 (time domain resource 0), the group 1 in the Cell0 occupies frequency resources 0-2, the group 2 occupies frequency resources 3-5; when resource allocation is performed, no group in the Cell1 can occupy the frequency resources 0-5, thus, when a serving base station of the Cell1 can allocate frequency resources to the group 1 and group2 in the Cell1 to occupy the frequency resources10-15; no group in the Cell2 can occupy the frequency resources 0-5 and 10-15, thus, a serving base station of the Cell2 can allocate frequency resources to the group 1 and group2 in the Cell2 to occupy the frequency resources 19-24.

At time 1 (time domain resource 1), the group3 of the Cell0 occupies frequency resources 3-5, when resource allocation is performed, the group3 in the Cell1 cannot occupy frequency resources 3-5, thus, a serving base station of the Cell1 can allocate frequency resources to the group3 in the Cell1 to occupy frequency resources 22-24; various groups in the Cell2 cannot occupy the frequency resources 3-5 and 22-24, thus a serving base station of the Cell2 can allocate frequency resources to the group 3 in the Cell2 to occupy frequency resources 0-2.

At time 2 (time domain resource 2), the group4 of the Cell0 occupies the frequency resources 0-2, when resource allocation is performed, the group4 in the Cell1 cannot occupy the frequency resources 0-2, thus, a serving base station of the Cell1 can allocate frequency resources to the group4 in the Cell1 to occupy the frequency resources 7-9; various groups in the Cell2 cannot occupy the frequency resources 0-2 and 7-9, thus a serving base station of the Cell2 can allocate frequency resources to the group 4 in the Cell2 to occupy the frequency resources 22-24.

At time 3 (time domain resource 2), the group5 in the Cell0 occupies the frequency resources 22-24, when resource allocation is performed, the group5 in the Cell1 cannot occupy frequency resources 22-24, thus, a serving base station of the Cell1 can allocate frequency resources to the group5 in the Cell1 to occupy the frequency resources 7-9; various groups in the Cell2 cannot occupy the frequency resources 22-24 and 7-9, thus a serving base station of the Cell2 can allocate frequency resources to the group 5in the Cell2 to occupy the frequency resources 0-2.

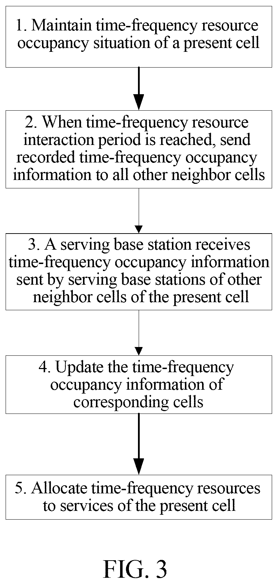

As shown in Fig 3, for the serving cell of the Cell0, the following steps are performed.
1. It is to maintain time-frequency resource occupancy situation of the present cell, that is, to record the time-frequency resources of all the groups comprising frame numbers, subframe numbers and RB occupancy bitmap in the semi-static scheduling period;
2. When the time-frequency resource interaction period is reached, it is to send recorded time-frequency resource occupancy information to all other neighbor cells, such as Cell1 and Cell2.
3. The serving base station receives the time-frequency resource occupancy information sent by serving base stations of other neighbor cells of the present cell, such as receiving the time-frequency resource occupancy information sent by the serving base stations of the Cell1 and Cell2.
4. It is to update the time-frequency occupancy information of corresponding neighbour cells, that is to record new time-frequency occupancy information of all the neighbor cells.
5. When the serving base station allocates time-frequency resources to trunking services of the present cell, it is to preferentially allocate time-frequency resources not occupied by other neighbor cells avoiding the time-frequency resources occupied by other neighbor cells as far as possible.

Accordingly, the embodiment provides a base station applied in the LTE trunking communication system, comprising: a control module and N resource allocation modules; wherein, N is a positive integer, and a value of N equals to cell numbers in service coverage of the bast station;
the control module is configured to obtain information about time-frequency resources of neighbor cells of a cell in service coverage of the base station used upon semi-static scheduling periodically;
each resource allocation module corresponds to each cell in the service coverage of the base station one to one, and is configured to record information about time-frequency resources of corresponding cells used upon semi-static scheduling and report to the control module; when allocating time-frequency resources to trunking services in the corresponding cells, according to time-frequency information of other cells obtained by the control module, preferentially allocate time-frequency resources not occupied by the other neighbor cells.

In the present invention, when the neighbor cell and the cell are located in service coverage of a same base station, the control module is configured to obtain the information about time-frequency resources of the neighbor cells of the present cell used on semi-static scheduling periodically, comprising that:
when a preset time-frequency resource interaction period is reached, the control module counts information about time-frequency resources of the neighbor cells used upon semi-static scheduling sent by the resource allocation module corresponding to the neighbor cell received during the preset time-frequency resource interaction period.

In the present invention, when the neighbor cell and the cell are located in service coverage of different base stations, the control module is configured to obtain the information about time-frequency resources of the neighbor cell of the present cell used upon semi-static scheduling periodically, comprising that:
when the preset time-frequency resource interaction period is reached, the control module sends received information about time-frequency resources of corresponding cells used upon semi-static scheduling recorded during the time-frequency resource interaction period sent by the resource allocation module to serving base stations of the neighbor cells of the present cell.

Preferably,
the neighbor cells are first N neighbor cells preset in neighbor cell list of current serving cell.

Preferably,
the information about time-frequency resources comprises: frame numbers, sub frame numbers and resource block occupancy bitmap.

It can be understood by those skilled in the art that some or all steps in the abovementioned method can be fulfilled by relevant hardware components instructed with a program, and the program may be stored in a computer readable storage media such as read only memory, magnetic disk or optical disk and so on. Optionally, all or some steps of the aforementioned embodiment can be implemented with one or more integrated circuits. Correspondingly, each module/unit in the aforementioned embodiment can be implemented in the form of hardware or software function module. The present invention does not restrict any combination of specific hardware and software forms.

The embodiments above mentioned are merely the preferred embodiments of the present invention. It is should be noted that, the present invention has many other embodiments, and that one skilled in the art may make a variety of changes and variations according to the present invention.

### Industrial Applicability

After the embodiments of the present invention are adopted, the same frequency interferences between the cells are reduced or avoided, the system performance is improved and the user awareness is enhanced in the LTE trunking communication system.

## Claims

1. A method for performing interference coordination in a Long Term Evolution, LTE, trunking communication system, in which a great number of wireless subscribers share a small number of wireless channels, for each base station, the method comprises following operations:
recording time-frequency resources occupancy information of cells in service coverage of a base station in a semi-static scheduling period;
when a preset time-frequency resource interaction period is reached, broadcasting the recorded time-frequency resources occupancy information to base stations of all other neighbor cells of the cells in the service coverage of the base station;
when time-frequency resources occupancy information sent by other base stations are received, updating time-frequency resources occupancy information of corresponding neighbor cells maintained by the base station itself;
when allocating time-frequency resources to trunking services of a cell in the service coverage of the base station, the base station preferentially allocating time-frequency resources which are not occupied by the other neighbor cells of the cell according to the obtained time-frequency resources occupancy information about time-frequency resources occupied by trunking sevices of the other neighbor cells of the cell, wherein if there is no time-frequency resources left for allocating to the cell except from time-frequency resources occupied by the neighbor cells, the time-frequency resources occupied by the other neighbor cells can be used.

2. The method according to claim 1, wherein,
the neighbor cells are first N neighbor cells preset in neighbor cell list of current serving cell.

3. The method according to claim 1, wherein,
the time-frequency resources occupancy information comprises: frame numbers, subframe numbers and resource block bitmap which are occupied by trunking services.

4. A base station applied in a Long Term Evolution, LTE, trunking communication system in which a great number of wireless subscribers share a small number of wireless channels, comprising: a control module and N resource allocation modules; wherein, N is a positive integer, and a value of N equals to the number of cells in service coverage of the base station;
each resource allocation module is configured to correspond to a cell in the service coverage of the base station one to one, record time-frequency resources occupancy information of the cell in the service coverage of the base station in a semi-static scheduling period and report the time-frequency resources occupancy information to the control module;
the control module is configured to broadcast the recorded time-frequency resources occupancy information to base stations of all other neighbor cells of the cell in the service coverage of the base station when a preset time-frequency resource interaction period is reached, and update time-frequency resources occupancy information of corresponding neighbor cells maintained by the base station itself when time-frequency resources occupancy information sent by other base stations are received ;
each resource allocation module is further configured to preferentially allocate time-frequency resources not occupied by the other neighbor cells of the cell according to the obtained time-frequency resources occupancy information about time-frequency resources occupied by trunking services of the other neighbor cells of the cell when time-frequency resources are allocated to trunking services of the cell, wherein if there is no time-frequency resources left for allocating to the cell except from time-frequency resources occupied by the neighbor cells, the time-frequency resources occupied by the other neighbor cells can be used.

5. The method according to claim 4, wherein,
the neighbor cells are first N neighbor cells preset in neighbor cell list of current serving cell.

6. The method according to claim 4, wherein,
the time-frequency resources occupancy information comprises: frame numbers, subframe numbers and resource block bitmap which are occupied by trunking services.

## Patentansprüche

1. Verfahren zum Durchführen von Interferenzkoordination in einem Long-Term-Evolution(LTE)-Gruppierungskommunikationssystem, in dem eine große Anzahl von drahtlosen Teilnehmern eine kleine Anzahl von drahtlosen Kanälen gemeinsam nutzen, für jede Basisstation, wobei das Verfahren die folgenden Operationen umfasst:
Aufzeichnen von Zeit-Frequenz-Ressourcenbelegungsinformationen von Zellen in der Dienstabdeckung einer Basisstation in einer semistatischen Planungsperiode;
wenn eine voreingestellte Zeit-Frequenz-Ressourceninteraktionsperiode erreicht ist, Übertragen der aufgezeichneten Zeit-Frequenz-Ressourcenbelegungsinformationen an Basisstationen aller anderen Nachbarzellen der Zellen in der Dienstabdeckung der Basisstation;
wenn von anderen Basisstationen gesendete Zeit-Frequenz-Ressourcenbelegungsinformationen empfangen werden, Aktualisieren von Zeit-Frequenz-Ressourcenbelegungsinformationen von entsprechenden Nachbarzellen, die von der Basisstation selbst erhalten werden;
beim Zuweisen von Zeit-Frequenz-Ressourcen an Gruppierungsdienste einer Zelle in der Dienstabdeckung der Basisstation weist die Basisstation vorzugsweise Zeit-Frequenz-Ressourcen, die nicht von den anderen Nachbarzellen der Zelle belegt sind, gemäß den erhaltenen Zeit-Frequenz-Ressourcenbelegungsinformationen über Zeit-Frequenz-Ressourcen zu, die durch Gruppierungsdienste der anderen Nachbarzellen der Zelle belegt sind, wobei, wenn keine Zeit-Frequenz-Ressourcen zum Zuweisen an die Zelle übrig sind, außer von Zeit-Frequenz-Ressourcen, die von den Nachbarzellen belegt sind, die von den anderen Nachbarzellen belegten Zeit-Frequenz-Ressourcen verwendet werden können.

2. Verfahren nach Anspruch 1, wobeidie Nachbarzellen erste N Nachbarzellen sind, die in einer Nachbarzellenliste der aktuell dienenden Zelle voreingestellt sind.

3. Verfahren nach Anspruch 1, wobeidie Zeit-Frequenz-Ressourcenbelegungsinformationen Folgendes umfassen:
Rahmennummern, Unterrahmennummern und eine Resourcen-Block-Bitmap, die von Gruppierungsdiensten belegt werden.

4. Basisstation, die in einem Long-Term-Evolution(LTE)-Gruppierungskommunikationssystem angewendet wird, in dem eine große Anzahl von drahtlosen Teilnehmern eine kleine Anzahl von drahtlosen Kanälen gemeinsam nutzen, Folgendes umfassend:
ein Steuermodul und N Ressourcenzuweisungsmodule;
wobei N eine positive ganze Zahl ist und ein Wert von N gleich der Anzahl von Zellen in der Dienstabdeckung der Basisstation ist;
jedes Ressourcenzuweisungsmodul konfiguriert ist, um einer Zelle in der Dienstabdeckung der Basisstation eins zu eins zu entsprechen, Zeit-Frequenz-Ressourcenbelegungsinformationen der Zelle in der Dienstabdeckung der Basisstation in einem semistatischen Planungszeitraum aufzuzeichnen und die Zeit-Frequenz-Ressourcenbelegungsinformationen an das Steuermodul zu melden;
das Steuermodul konfiguriert ist, um die aufgezeichneten Zeit-Frequenz-Ressourcenbelegungsinformationen an Basisstationen aller anderen Nachbarzellen der Zelle in der Dienstabdeckung der Basisstation zu übertragen, wenn eine voreingestellte Zeit-Frequenz-Ressourceninteraktionsperiode erreicht ist, und die Zeit-Frequenz-Ressourcenbelegungsinformationen von entsprechenden Nachbarzellen zu aktualisieren, die von der Basisstation selbst erhalten werden, wenn von anderen Basisstationen gesendete Zeit-Frequenz-Ressourcenbelegungsinformationen empfangen werden;
jedes Ressourcenzuweisungsmodul ferner konfiguriert ist, um vorzugsweise Zeit-Frequenz-Ressourcen, die nicht von den anderen Nachbarzellen der Zelle belegt sind, gemäß der erhaltenen Zeit-Frequenz-Ressourcenbelegungsinformationen über Zeit-Frequenz-Ressourcen, die von Gruppierungsdiensten der anderen Nachbarzellen der Zelle belegt werden, zuzuweisen, wenn Zeit-Frequenz-Ressourcen Gruppierungsdiensten der Zelle zugewiesen werden, wobei, wenn keine Zeit-Frequenz-Ressourcen übrig sind, die der Zelle zugewiesen werden können, außer von Zeit-Frequenz-Ressourcen, die von den Nachbarzellen belegt werden, die Zeit-Frequenz-Ressourcen, die von den anderen Nachbarzellen belegt werden, verwendet werden können.

5. Verfahren nach Anspruch 4, wobeidie Nachbarzellen erste N Nachbarzellen sind, die in einer Nachbarzellenliste der aktuell dienenden Zelle voreingestellt sind.

6. Verfahren nach Anspruch 4, wobeidie Zeit-Frequenz-Ressourcenbelegungsinformationen Folgendes umfassen:
Rahmennummern, Unterrahmennummern und eine Resourcen-Block-Bitmap, die von Gruppierungsdiensten belegt werden.

## Revendications

1. Procédé de coordination d'interférences dans un système de communication à ressources partagées d'évolution à long terme, LTE, dans lequel un grand nombre d'abonnés sans fil se partagent un petit nombre de canaux sans fil, pour chaque station de base, le procédé comprend les opérations suivantes :
enregistrement des informations d'occupation de ressources temps-fréquence de cellules dans la couverture de service d'une station de base pendant une période de programmation semi-statique ;
lorsqu'une période d'interaction de ressources temps-fréquence prédéfinie est atteinte, diffusion des informations d'occupation de ressources temps-fréquence enregistrées aux stations de base de toutes les autres cellules voisines des cellules dans la couverture de service de la station de base ;
lorsque des informations d'occupation de ressources temps-fréquence envoyées par d'autres stations de base sont reçues, mise à jour des informations d'occupation de ressources temps-fréquence des cellules voisines correspondantes conservées par la station de base elle-même ;
lors de l'attribution de ressources temps-fréquence aux services à ressources partagées d'une cellule dans la couverture de service de la station de base, la station de base attribuant de préférence des ressources temps-fréquence qui ne sont pas occupées par les autres cellules voisines de la cellule en fonction des informations d'occupation de ressources temps-fréquence obtenues relatives aux ressources temps-fréquence occupées par les services à ressources partagées des autres cellules voisines de la cellule, dans lequel, s'il ne reste plus de ressources temps-fréquence à attribuer à la cellule, à l'exception des ressources temps-fréquence occupées par les cellules voisines, les ressources temps-fréquence occupées par les autres cellules voisines peuvent être utilisées.

2. Procédé selon la revendication 1, dans lequel,
les cellules voisines sont les N premières cellules voisines prédéfinies dans la liste de cellules voisines de la cellule principale actuelle.

3. Procédé selon la revendication 1, dans lequel,
les informations d'occupation de ressources temps-fréquence comprennent :les numéros de trame, les numéros de sous-trame et le topogramme binaire du bloc de ressources qui sont occupés par des services à ressources partagées.

4. Station de base utilisée dans un système de communication à ressources partagées d'évolution à long terme, LTE, dans laquelle un grand nombre d'abonnés sans fil se partagent un petit nombre de canaux sans fil, comprenant :un module de contrôle et N modules d'attribution de ressources ;où N est un entier positif et une valeur de N est égale au nombre de cellules dans la couverture de service de la station de base ; chaque module d'attribution de ressources est configuré pour correspondre individuellement à une cellule de la couverture de service de la station de base, enregistrer des informations d'occupation de ressources temps-fréquence de la cellule dans la couverture de service de la station de base pendant une période de programmation semi-statique et rapporter les informations d'occupation de ressources temps-fréquence au module de contrôle ;
le module de contrôle est configuré pour diffuser les informations d'occupation de ressources temps-fréquence enregistrées aux stations de base de toutes les autres cellules voisines de la cellule dans la couverture de service de la station de base lorsqu'une période d'interaction de ressources temps-fréquence prédéfinie est atteinte, et mettre à jour les informations d'occupation de ressources temps-fréquence des cellules voisines correspondantes conservées par la station de base elle-même lorsque des informations d'occupation de ressources temps-fréquence envoyées par d'autres stations de base sont reçues ;
chaque module d'attribution de ressources est en outre configuré pour attribuer de préférence des ressources temps-fréquence non occupées par les autres cellules voisines de la cellule en fonction des informations d'occupation de ressources temps-fréquence obtenues relatives aux ressources temps-fréquence occupées par les services à ressources partagées des autres cellules voisines de la cellule lorsque des ressources temps-fréquence sont attribuées à des services à ressources partagées de la cellule, dans lequel, s'il ne reste plus de ressources temps-fréquence à attribuer à la cellule, à l'exception des ressources temps-fréquence occupées par les cellules voisines, les ressources temps-fréquence occupées par les autres cellules voisines peuvent être utilisées.

5. Procédé selon la revendication 4, dans lequel,
les cellules voisines sont les N premières cellules voisines prédéfinies dans la liste de cellules voisines de la cellule principale actuelle.

6. Procédé selon la revendication 4, dans lequel,
les informations d'occupation de ressources temps-fréquence comprennent :
les numéros de trame, les numéros de sous-trame et le topogramme binaire du bloc de ressources qui sont occupés par des services à ressources partagées.
